# EUROPEAN PATENT SPECIFICATION

(11) **EP 2 030 889 B1**
(45) Date of publication and mention of the grant of the patent: **26.05.2010**
(21) Application number: 08103552.9
(22) Date of filing: 15.04.2008
(51) Int. Cl.: B62M 9/12, B62J 13/00

(54) **Bicycle rear derailleur**
Hinterradkettenschaltung für ein Fahrrad
Dérailleur arrière de bicyclette

(30) Priority: 31.08.2007 JP 2007226714
(43) Date of publication of application: 04.03.2009
(73) Proprietor: SHIMANO INC., Osaka 590-8577 (JP)
(72) Inventor: Kunisawa, Satoru, Osaka 590-8577 (JP)
(74) Representative: Harrison, Robert John

(56) References cited:
- US-B1- 6 416 434

## Description

### BACKGROUND OF THE INVENTION

### Field of the Invention

This invention generally relates to a bicycle derailleur. More specifically, the present invention relates to a bicycle rear derailleur for selectively placing a chain on any one of a plurality of sprockets that are mounted to a rear wheel hub.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the drive train.

There are bicycles, particularly sports-use bicycles such as road bikes and mountain bikes, which have a rear derailleur for operating an external gear shifting device. The rear derailleur generally comprises a mounting member that is mounted to a frame of the bicycle, a link mechanism (example of the "connecting mechanism" mentioned in the claims) having one end thereof mounted to the mounting member, a movable member that is mounted to the other end of the link mechanism and contrived to be movable relative to the mounting mechanism, and a chain guide that is pivotally mounted to the movable member. The chain guide serves to apply tension to the chain and to move the chain in order to place it on any one of the rear sprockets. The chain guide has an outside plate member (example of the "first plate member" mentioned in the claims) pivotally mounted to the movable member, an inside plate member (example of the "second plate member" mentioned in the claims) arranged generally parallel to the outside plate member, a guide pulley configured to mesh with a chain and rotatably mounted between the plate members in the vicinity of one end of the plate members, and a tension pulley configured to mesh with the chain and rotatably mounted between the plate members in the vicinity of the other end of the plate members.

There are double tension type rear derailleurs that have, in addition to the chain guide, a torsional coil spring or other force applying member installed inside the mounting member in order to apply tension to the chain, and there are single tension type rear derailleurs that do not have a force applying member installed inside the mounting member. In a single tension type, the chain guide is the only member that applies tension to the chain.

Conventional rear derailleurs are provided with a chain disengagement prevention part that is arranged between the portions where the pulleys are supported and serves to prevent the chain from coming off the guide pulley. A conventional chain disengagement prevention part is formed by folding a portion of the inside plate member toward the outside plate member (see, for example, Japanese Laid-Open Patent Publication No. 5-69878). The conventional chain disengagement prevention part is arranged on the edge portion of the inside plate that is farther from the mounting member.

In view of the above, it will be apparent to those skilled in the art from this disclosure that there exists a need for an improved bicycle rear derailleur. This invention addresses this need in the art as well as other needs, which will become apparent to those skilled in the art from this disclosure. Document US 6 416 434 discloses a bicycle rear derailleur according to the preamble of claim 1.

### SUMMARY OF THE INVENTION

In the conventional configuration described abode, the chain guide rotates greatly in a frontward direction (counter clockwise when viewed from the outside) when the chain is placed on the largest sprocket in both the front and the rear. When the chain guide pivots greatly toward the front, the chain drop preventing pat provided on the inside plate member draws near the large sprocket. From this state, there are times when the chain guide rotates further in the counter clockwise direction momentarily due to a physical, impact, particularly in the case of a mountain bike traveling at a high speed on a bumpy off-road trail (such as during a race). When this further rotation occurs, it is possible for the chain disengagement prevention part to enter in-between the teeth of the sprocket and become jammed in the teeth.

If the rear derailleur is a double tension type, then the chain disengagement prevention part can escape from between the teeth of the sprocket due to the pivoting action of the mounting member when the sprocket rotates in the forward direction (direction of forward movement). However, if the derailleur is a single tension type, then there is the possibility that the chain disengagement prevention part, i.e., the inside plate member, will moved forcefully by the sprocket and the rear derailleur will be broken.

One object of the present invention is to make it more difficult for a chain disengagement prevention part provided on a chain guide to become jammed in the teeth of a sprocket. This object is solved by means of a bicycle rear derailleur having the features as recited in claim 1. Preferred embodiments are recited in the dependent claims.

In accordance with a preferred embodiment of the present invention, a bicycle rear derailleur is provided that basically comprises a mounting member, a movable member, a connecting mechanism and a chain guide. The connecting mechanism is movably connected at a first end to the mounting member to move with respect to the mounting member. The movable member is connected to a second end of the connecting mechanism to be moved by the connecting mechanism. The chain guide is pivotally connected to the movable member to pivot about a first axis. The chain guide includes a first plate member, a second plate member, a guide pulley and a tension pulley, with at least one of the first and second plate members including a chain disengagement prevention part arranged between the guide pulley and the tension pulley. The first plate member is connected at a first end to the movable member such that the first plate member pivots freely about the first axis. The second plate member is spaced from the first plate member to form a chain receiving space therebetween. The guide pulley is rotatably arranged between the first and second plate members at the first end of the first plate member. The tension pulley is arranged at a position separated from the guide pulley. The chain disengagement prevention part is a bent part of at least one of the first and second plate members that is formed by folding an edge portion of at least one of the first and second plate members when the chain guide extends substantially in a vertical direction the edge portion being on a side of the chain guide that is closer to the mounting member, the chain disengagement prevention part is entirely arranged on one side of the contact line that is closer to the mounting member, with the contact line being defined as a tangent line to two imaginary circles joining tooth tips of each of the guide pulley and the tension pulley, respectively, on sides of imaginary circles that are farther from the mounting member.

This bicycle rear derailleur is operated by moving the connecting mechanism with a shift cable or an actuator when shifting gears. The movement of the connecting mechanism causes the chain guide to move to a position corresponding to one of the rear sprockets arranged side-by-side along the axial direction of the hub and guide the chain onto the corresponding rear sprocket. During this movement, the chain guide pivots about a first axis. The chain guide pivots forward the most when the chain is put onto the largest sprockets in both the front and the rear (i.e., the largest rear sprocket and the largest front sprocket). Consequently, there are times when the chain disengagement prevention part becomes close to the teeth of largest rear sprocket.

In this preferred embodiment of the present invention, the chain disengagement prevention part is formed by folding an edge portion of the first or second plate member that is located on the side of the plate member that is closer to the mounting member. Consequently, when the chain guide is close to the rear sprocket, the chain disengagement prevention part is farther from the rear sprocket than it would be if it were formed by bending an edge portion of the first or second plate member that is located on the side of the plate member that is farther from the mounting member, i.e., the chain disengagement prevention part is in a position where it cannot easily become jammed in the teeth of the rear sprocket. Thus, the chain disengagement prevention part is less likely to become jammed in the teeth of the rear sprocket.

In a bicycle rear derailleur in accordance with a preferred embodiment the chain disengagement prevention part extends to be aligned with a contour of a chain path that extends between the guide pulley and the tension pulley. In this aspect of the present invention, the chain can be prevented from dropping off in an effective manner because the chain disengagement prevention part is arranged to be generally parallel to the moving chain.

The chain disengagement prevention part is entirely arranged on one side of a contact line that is closer to the mounting member, with the contact line being defined as a tangent line to two imaginary circles joining tooth tips of each of the guide pulley and the tension pulley, respectively, on sides of the imaginary circles that are farther from mounting member. In this aspect of the present invention, the chain disengagement prevention part is arranged in a position that is farther from the rear sprocket than the contact line. Thus, the chain disengagement prevention part is even less likely to become jammed in the teeth of the rear sprocket.

In a bicycle rear derailleur in accordance with a preferred embodiment of the present invention the chain disengagement prevention part extends from the second plate member. With this aspect of the present invention, the chain disengagement prevention part is easier to form because it is formed by folding (bending) the second plate member, which is generally thinner and requires less strength than the first plate member. The first plate member is generally thicker and stronger because it is connected to the movable member and serves the function of guiding the chain to one of the rear sprockets.

In a preferred embodiment the chain disengagement prevention part has a width that is equal to or larger than ten millimeters and smaller than or equal to thirty millimeters. In this aspect of the present invention, the width of the chain disengagement prevention part is larger than the space between two teeth of a rear sprocket, which is typically approximately ten millimeters. Consequently, even if the chain disengagement prevention part contacts a rear sprocket, it will not readily become jammed between two teeth of the rear sprocket. It is not desirable for the width of the chain disengagement prevention part to be larger than thirty millimeters because the weight of the derailleur will increase.

In accordance with a preferred embodiment of the present invention, a bicycle rear derailleur is provided that basically comprises a mounting member, a movable member, a connecting mechanism and a chain guide. The connecting mechanism is movably connected at a first end to the mounting member to move with respect to the mounting member. The movable member is connected to a second end of the connecting mechanism to be moved by the connecting mechanism. The chain guide is pivotally connected to the movable member to pivot about a first axis. The chain guide includes a first plate member, a second plate member, a guide pulley and a tension pulley, with at least one of the first and second plate members including a chain disengagement prevention part arranged between the guide pulley and the tension pulley. The first plate member is connected at a first end to the movable member such that the first plate member pivots freely about the first axis. The second plate member is spaced from the first plate member to form a chain receiving space therebetween. The guide pulley is rotatably arranged between the first and second plate members at the first end of the first plate member. The tension pulley is arranged at a position separated from the guide pulley. The chain disengagement prevention part is arranged between the guide pulley and the tension pulley. The chain disengagement prevention part has a shaft-like form that extends from at least one of the first and second plate members. The chain disengagement prevention part is entirely arranged on a side of a contact line that is closer to the mounting member, with the contact line being defined as a tangent line to two imaginary circles joining tooth tips of each of the guide pulley and the tension pulley, respectively, on sides of the imaginary circles that are farther from mounting member.

This rear derailleur is operated by moving the connecting mechanism with a shift cable or an actuator when shifting gears. The movement of the connecting mechanism causes the chain guide to move to a position corresponding to one of the rear sprockets arranged side-by-side along the axial direction of the hub and guide the chain onto the corresponding rear sprocket. During this movement, the chain guide pivots about a first axis. The chain guide pivots forward the most when the chain is put onto the largest sprockets in both the front and the rear (i.e., the largest rear sprocket and the largest front sprocket). Consequently, there are times when the chain disengagement prevention part becomes close to the teeth of largest rear sprocket due to a physical impact or the like.

Since the chain disengagement prevention part has the form of a shaft that extends from at least one of the first and second plate members, the external surface of the chain drop preventing member is smooth and without any corners. Additionally, the chain disengagement prevention part is entirely arranged on the side of a contact line that is closer to the mounting member, the contact line being tangent to two imaginary circles joining tooth tips of each of the guide pulley and the tension pulley, respectively, on sides of said imaginary circles that are farther from mounting member. Consequently, the chain disengagement prevention part is arranged farther to the inside than the contact line joining the two pulleys.

Since the chain disengagement prevention part is arranged on the side of the contact line that is closer to the mounting member, the chain disengagement prevention part is arranged in a position separated from the rear sprocket where it cannot easily become jammed in the teeth of the rear sprocket. Thus, the chain disengagement prevention part is even less likely to become jammed in the teeth of the rear sprocket. Furthermore, since the chain disengagement prevention part is shaft-shaped, it will not easily become jammed even if it does contact in-between the teeth of the rear sprocket. Consequently, even when the chain guide is in the most forwardly pivoted position, the chain disengagement prevention part does not easily become jammed in the rear sprocket.

Preferably the chain disengagement prevention part is a shaft member fixed to the second plate member. With this aspect of the present invention, the chain disengagement prevention part is easy to make because it is a separate shaft member that is fixed to the second plate member.

In accordance with a preferred embodiment of the present invention, a bicycle rear derailleur is provided that basically comprises a mounting member, a movable member, a connecting mechanism and a chain guide. The connecting mechanism is movably connected at a first end to the mounting member to move with respect to the mounting member. The movable member is connected to a second end of the connecting mechanism to be moved by the connecting mechanism. The chain guide is pivotally connected to the movable member to pivot about a first axis. The chain guide includes a first plate member, a second plate member, a guide pulley and a tension pulley, with at least one of the first and second plate members including a chain disengagement prevention part arranged between the guide pulley and the tension pulley. The first plate member is connected at a first end to the movable member such that the first plate member pivots freely about the first axis. The second plate member is spaced from the first plate member to form a chain receiving space therebetween. The guide pulley is rotatably arranged between the first and second plate members at the first end of the first plate member. The tension pulley is arranged at a position separated from the guide pulley. The chain disengagement prevention part is arranged between the guide pulley and the tension pulley.

The chain disengagement prevention part is entirely arranged on a side of a contact line that is closer to the mounting member, and configured to be aligned with a contour of a chain that is mounted between the guide pulley and the tension pulley, with the contact line being defined as a tangent line to two imaginary circles joining tooth tips of each of the guide pulley and the tension pulley, respectively, on sides of the imaginary circles that are farther from mounting member.

This rear derailleur is operated by moving the connecting mechanism with a shift cable or an actuator when shifting gears. The movement of the connecting mechanism causes the chain guide to move to a position corresponding to one of the rear sprockets arranged side-by-side along the axial direction of the hub and guide the chain onto the corresponding rear sprocket. During this movement, the chain guide pivots about a first axis. The chain guide pivots forward the most when the chain is put onto the largest sprockets in both the front and the rear (i.e., the largest rear sprocket and the largest front sprocket). Consequently, there are times when the chain disengagement prevention part becomes close to the teeth of largest rear sprocket due to a physical impact or the like.

In this aspect of the present invention, the chain disengagement prevention part extends from at least one of the first and second plate members and is arranged on the side of the contact line that is closer to the mounting member, the contact line being tangent to the two imaginary circles on sides of the imaginary circles that are farther from mounting member. Thus, the chain disengagement prevention part is entirely arranged on a side of a contact line that is closer to the mounting member, the tangent being tangent to two imaginary circles joining tooth tips of each of the guide pulley and the tension pulley, respectively, on sides of the imaginary circles that are farther from mounting member. Consequently, the chain disengagement prevention part is arranged farther to the inside than the contact line joining the two pulleys. Additionally, the chain disengagement prevention part is arranged to be aligned with the contour of the chain that passes across the two pulleys.

Since the chain disengagement prevention part is arranged on the side of the contact that is closer to the mounting member, the chain disengagement prevention part is arranged in a position separated from the rear sprocket where it cannot easily become jammed in the teeth of the rear sprocket. Thus, the chain disengagement prevention part is less likely to become jammed in the teeth of the rear sprocket. Furthermore, since the chain disengagement prevention part is arranged to be generally parallel to the chain that passes across the pulleys, it can contact the chain over a wide area if the chain starts to drop off and can prevent the chain from dropping in an effective manner.

In a bicycle rear derailleur in accordance with a preferred embodiment of the present invention the chain disengagement prevention part includes at least a portion arranged on a side of a second straight line that is closer to the guide pulley, with the second straight line being positioned at a distance of fifty millimeters from a rotational center of the guide pulley and oriented to intersect perpendicularly with a first straight line that joins the rotational center of the guide pulley and a rotational center of the tension pulley. In this aspect of the present invention, at least a portion of the chain disengagement prevention part is located on the side of a second straight line that is closer to the guide pulley, the second straight line being separated from the rotational center of the guide pulley by fifty millimeters. As a result, the chain disengagement prevention part can be prevented from interfering with the tension pulley even if the derailleur employs a short cage chain guide, in which the distance between the guide pulley and the tension pulley is small.

The chain guide may be configured so as to solely apply tension to a chain when the chain is mounted on the guide pulley and the tension pulley. With single tension rear derailleurs, it is more difficult to alleviate a jam in which the chain disengagement prevention part becomes jammed in the rear sprocket than in the case of a double tension rear derailleur because the chain is guided solely by the pivoting of the chain guide.

Optionally the mounting member includes a bracket configured to be fixed to the frame, and a base member pivotally connected to the bracket for pivoting about a second axis. With this aspect of the present invention, the position of the chain disengagement prevention part can be changed by changing the shape of the bracket alone. Thus, if the rear derailleur is to be used on a special frame that causes the chain disengagement prevention part to be in a position where it can easily become jammed in the sprocket, then the chain disengagement prevention part can be arranged in a position where it will not easily become jammed in the sprocket by merely changing the shape of the bracket as appropriate.

In a bicycle rear derailleur in accordance with a further preferred embodiment of the present invention the guide pulley has a center rotational axis that coincides with the first axis. In this aspect of the present invention, the pivot center of the chain guide and the rotational center of the guide pulley are coincident with each other. As a result, the guide pulley and the chain guide can be supported on the movable member with the same member and the support structure of the guide pulley and the chain guide can be simplified.

Preferably the guide pulley and the tension pulley each have a tooth count of thirteen or smaller. With this aspect of the present invention, since both pulleys can be made to have smaller diameters, the weight of the derailleur can be reduced and contact of the tension pulley against the rear sprocket that could result from a larger pulley diameter can be prevented.

In this present invention, the chain disengagement prevention part is formed by folding an edge portion of the first or second plate member that is located on the side of the plate member that is closer to the mounting member. Consequently, when the chain guide is close to the rear sprocket, the chain disengagement prevention part is farther from the rear sprocket than it would be if it were formed by bending an edge portion of the first or second plate member that is located on the side of the plate member that is farther from the mounting member, i.e., the chain disengagement prevention part is in a position where it cannot easily become jammed in the teeth of the rear sprocket. Thus, the chain disengagement prevention part is less likely to become jammed in the teeth of the rear sprocket.

In another preferred embodiment of the present invention, the chain disengagement prevention part is arranged on the side of a contact line (tangent line) joining the two pulleys that is closer to the mounting member. As a result, the chain disengagement prevention part is arranged in a position separated from the rear sprocket where it cannot easily become jammed in the teeth of the rear sprocket. Thus, the chain disengagement prevention part is even less likely to become jammed in the teeth of the rear sprocket. Furthermore, since the chain disengagement prevention part is shaft-shaped, it will not easily become jammed even if it does contact in-between the teeth of the rear sprocket. Consequently, even when the chain guide is in the most forwardly pivoted position, the chain disengagement prevention part does not easily become jammed in the rear sprocket.

These and other objects, features, aspects and advantages of the present invention will become apparent to those skilled in the art from the following detailed description, which, taken in conjunction with the annexed drawings, discloses particularly preferred embodiments of the present invention.

### BRIEF DESCRIPTION OF THE DRAWINGS

Referring now to the attached drawings which form a part of this original disclosure:

Figure 1 is a side elevational view of a bicycle with a rear derailleur in accordance with a first embodiment;

Figure 2 is a schematic diagram showing one example of an arrangement of front and rear sprockets of the bicycle illustrated in Figure 1;

Figure 3 is an outside elevational view of the rear sprockets and the rear derailleur according to the first embodiment;

Figure 4 is a rear end elevational view (left-side of Figure 3) of the rear sprockets and the rear derailleur according to the illustrated embodiment;

Figure 5 is an outside elevational view of the chain guide of the rear derailleur according to the first embodiment;

Figure 6 is a front end elevational view (right-side of Figure 3) of the chain guide of the rear derailleur according to the first embodiment;

Figure 7 is an outside elevational view of the inside plate member of the chain guide of the rear derailleur according to the first embodiment;

Figure 8 is an outside elevational view of the rear sprockets and the rear derailleur, showing the operation of the chain guide according to the first embodiment;

Figure 9 is an enlarge partial view of the chain guide of the rear derailleur illustrated in Figure 8, showing the operation of the chain guide according to the first embodiment;

Figure 10 is an outside elevational view, similar to Figure 7, of an inside plate member of a chain guide according to a variation of the first embodiment;

Figure 11 is an outside elevational view, similar to Figure 7, of an inside plate member of a chain guide for a long cage rear derailleur according to a second embodiment;

Figure 12 is an outside elevational view, similar to Figure 7, of an inside plate member of a chain guide for a short cage rear derailleur according to the second embodiment; and

Figure 13 is an outside elevational view, similar to Figure 7, of an inside plate member of a chain guide for a long cage rear derailleur in accordance with a third embodiment.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

### FIRST EMBODIMENT

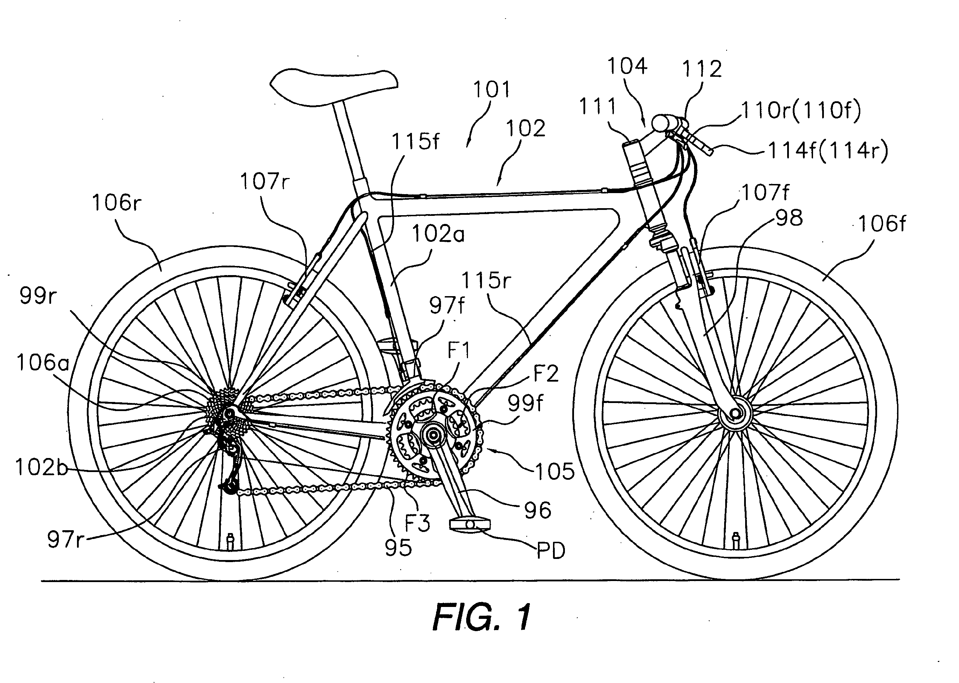

Referring initially to Figure 1, a bicycle 101 is illustrated with a rear derailleur 97r in accordance with one embodiment of the present invention. In the illustrated embodiment, the bicycle 101 is a mountain bike for off-road use. The bicycle 101 basically includes a frame 102, a drive train (component) 105, front and rear wheels 106f and 106r, front and rear brake devices 107f and 107r, and a pair of (front and rear) gearshift operating parts or shifters 110f and 110r. The frame 102 has diamond shape. A front fork 98 is pivotally coupled to the frame 102 and a handlebar component 104 is fixedly attached to the front fork 98 to steer the bicycle 101. The drive train (component) 105 includes a chain 95, a crank set 96 to which a pair of pedals PD are mounted, front and rear derailleurs 97f and 97r, front and rear sprocket clusters 99f and 99r (i.e. a plurality of front chain rings and a rear sprocket cassette), and a freewheel (not shown) mounted between the rear sprocket cluster 99r and the rear hub of the rear wheel 106r. The front and rear wheels 106f and 106r are mounted to the front fork 98 and the rear part (rear triangle) of the frame 102, respectively. The front and rear brake devices 107f and 107r are provided to selectively apply braking forces to the front and rear wheels 106f and 106r, respectively. The gearshift operating parts 110f and 110r are operated by the rider in order to control movement (e.g., perform gearshift operations) of the front and rear derailleurs 97f and 97r, respectively.

The handlebar component 104 includes a handlebar stem 111 and a handlebar 112 inserted into and fixedly attached to the top end of the handlebar stem 111. The handlebar stem 111 is inserted into and fixedly attached to the upper part of the front fork 98 to steer the front fork 98, and thus, to steer the front wheel 106f. The handlebar 112 is a flat bar type. The handlebar 112 is provided with a pair of (left and right) brake levers 114f and 114r to control the front and rear brake devices 107f and 107r, respectively. The gearshift operating parts 110f and 110r are disposed in close proximity to these brake levers 114f and 114r. In the illustrated embodiment, the brake levers 114f and 114r are integrated with the gearshift operating parts 110f and 110r. However, the brake levers 114f and 114r can be separate from the gearshift operating parts 110f and 110r, respectively. The gearshift operating parts 110f and 110r are operatively coupled (linked) to the front and rear derailleurs 97f and 97r via Bowden gearshift cables 115f and 115r, respectively. Each of the shift cables 115f and 115r includes an inner wire and an outer sheath in a conventional manner.

In the drive train 105 the chain 95 is wrapped onto the front and rear sprocket clusters 99f and 99r such that when the rider rotates the crankset 96 via the pedals PD, the bicycle 101 can be propelled in a forward direction in a conventional manner. The front and rear derailleurs 97f and 97r are used to move the chain 95 laterally onto different sprockets of the front and rear sprocket clusters 99f and 99r, respectively, in order to control the gear ratio of the drive train 105.

The front derailleur 97f is mounted on a seat tube 102a of the frame 102 to guide the chain 95 between at least three front shift positions using the shift control device 110f to selectively pull and release the shift cable 115f. Thus, the front derailleur 97f is positioned in one of three gearshift positions by the gearshift operating part 110f, and guides the chain 95 between the front sprocket clusters 99f. The rear derailleur 97r is mounted to a rear hanger part 102b at the rear part (rear triangle) of the frame 102 to guide the chain 95 between a plurality (e.g. nine) of different shift positions using the shift control device 110r to selectively pull and release the shift cable 115r. Thus, the rear derailleur 97r is positioned in one of nine gearshift positions by the gearshift operating part 110r, and guides the chain 95 between the rear sprocket clusters 99f and 99r.

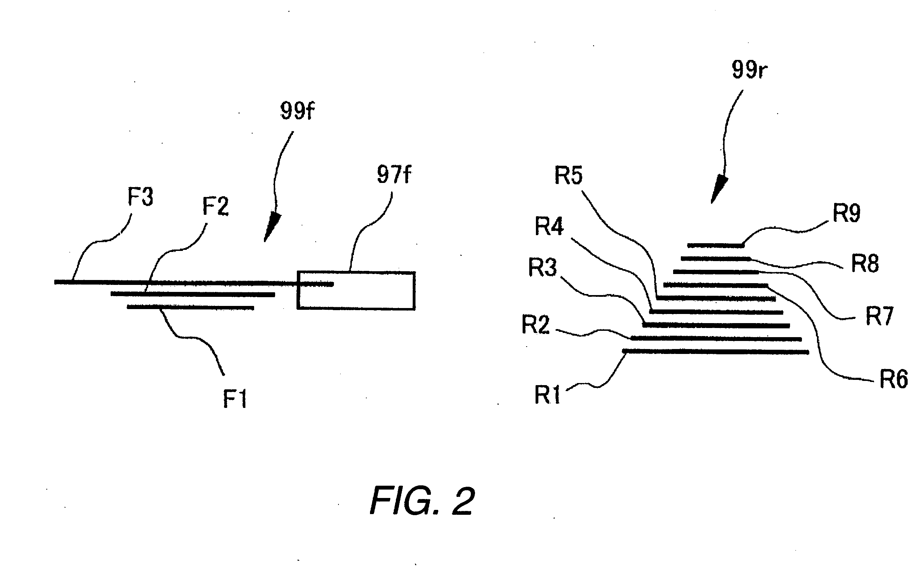

As shown in Figure 2, the front sprocket cluster 99f has three (for example) front sprockets F1, F2, and F3, which have different numbers of teeth and are lined up in the axial direction of the crankshaft. As shown in Figure 2, the rear sprocket cluster 99r has nine (for example) rear sprockets R1 to R9, which have different numbers of teeth and are lined up in the axial direction along a hub axle 106a of the rear wheel 106r. Here, in the front sprocket cluster 99f, the number of teeth increases in order from the low sprocket F1 located furthest toward the inside, and the top sprocket F3 located furthest toward the outside has the largest number of teeth. On the front sprocket cluster 99f, the number of teeth increases from the low sprocket F1 (the innermost sprocket in the axial direction) such that the number of teeth is largest on the top sprocket F3 (the outermost sprocket in the axial direction). On the rear sprocket cluster 99r, the number of teeth decreases from the low sprocket R1 (the innermost sprocket in the axial direction) such that the number of teeth is smallest on the top sprocket R9 (the outermost sprocket in the axial direction). The front and rear derailleurs 97f and 97r perform gearshift operations by moving the chain 95 to a different one of the plurality of sprockets F1 to F3 and/or to a different one of the plurality of sprockets R1 to R9, respectively. This shifting is initiated by the gearshift operating parts 110f and 110r.

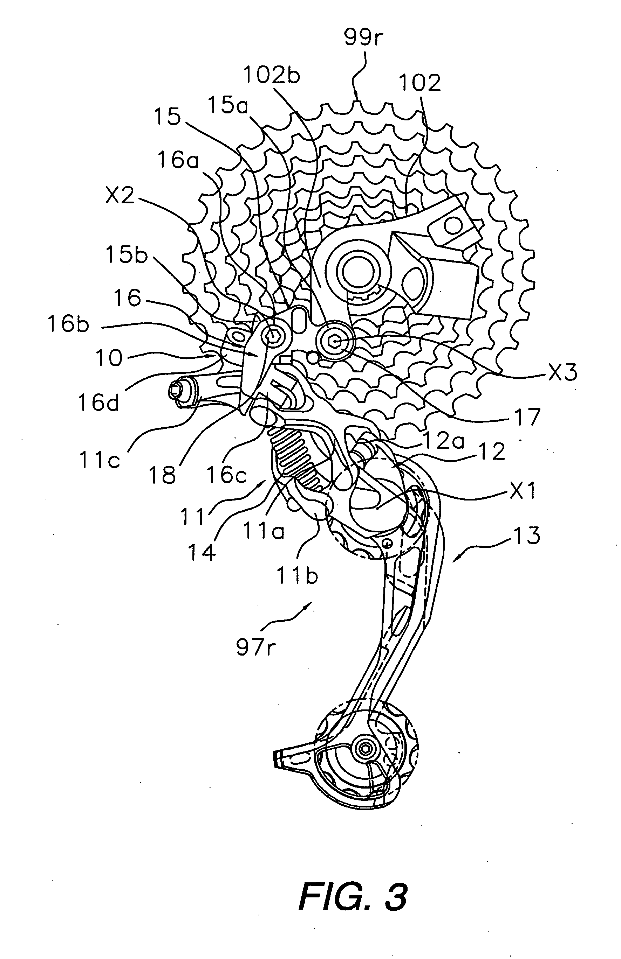

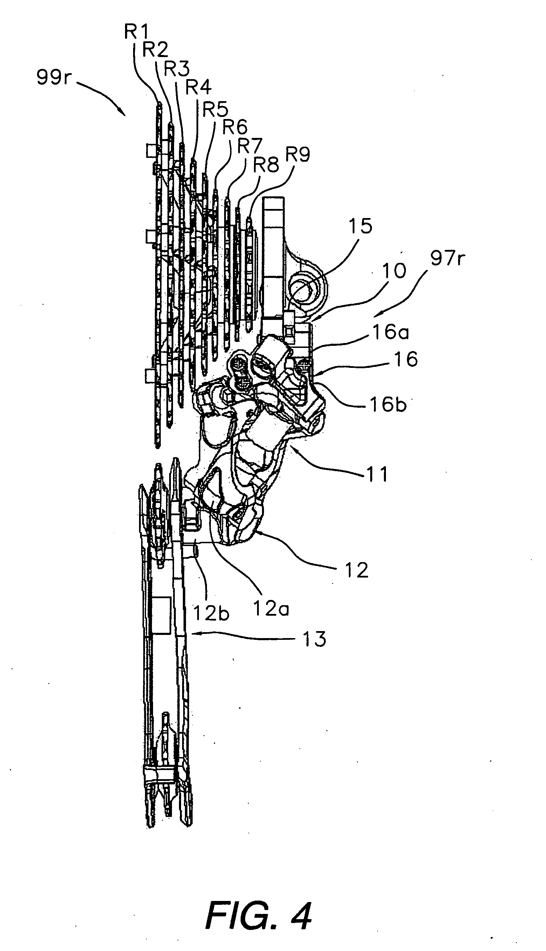

The rear derailleur 97r according to this embodiment of the present invention is mounted on the rear hanger part 102b provided to the rear part of the frame of the bicycle, and selectively transfers the chain 95 to one of the plurality of sprockets R1 through R9 of the rear sprocket cluster 99r. As shown in Figures 3 and 4, the rear derailleur 97r comprises a mounting member 10, a link mechanism (one example of a connecting mechanism) 11, a movable member 12 and a chain guide 13. The mounting member 10 is fastened to the rear hanger part 102b. The link mechanism 11 has a first end pivotally mounted on the mounting member 10 and can move with respect to the mounting member 10. The movable member 12 is pivotally connected to a second end of the link mechanism 11. The chain guide 13 is pivotally connected to the movable member 12 so that this chain guide 13 is free to swing about a first pivot axis X2. The chain guide 13 moves the chain 95 in order to transfer the chain 95 to one of the sprockets R1 through R9. The chain guide 13 is the only member that applies a tension to the chain 95.

The mounting member 10 includes a bracket 15 and a base member 16. The bracket 15 includes a fastening part 15a and a supporting part 15b. The fastening part 15a can be fastened to the rear hanger part 102b of the frame 102. The supporting part 15b is disposed to the rear of the fastening part 15a in a state in which the fastening part 15a is fastened to the rear hanger part 102b. The base member 16 is mounted on the supporting part 15b so that this base member 16 can rotate about a second pivot axis X2 that is substantially parallel to the hub axle 106a (Figure 1) of the rear wheel 106r.

The bracket 15 is a plate-form member made of metal. The fastening part 15a can be fastened to the rear hanger part 102b in a prescribed rotational orientation such that the support part 15b is arranged rearward of the fastening part 15a. The bracket 15 is screwed into the rear hanger part 102b and is fastened by a first fastening bolt 17 which has a third pivot axis X3 that is substantially parallel to the hub axle 106a. A second fastening bolt 18 which has a second pivot axis X2 is screwed into the supporting part 15b. The second fastening bolt 18 has the second pivot axis X2.

As shown in Figures 3 and 4, the base member 16 has a generally cylindrical boss part 16a, an arm part 16b and a link supporting part 16c. The cylindrical boss part 16a is connected to the supporting part 15b by the second fastening bolt 18 so that this boss part 16a can swing about the second pivot axis X2. The arm part 16b extends in the radial direction from the boss part 16a. The boss part 16a is free to rotate through a prescribed angular range (e.g., 90 degrees) with respect to the supporting part 15b. The link supporting part 16c is used to mount the link mechanism 11. The link supporting part 16c is formed on the tip end of the arm part 16b. Furthermore, an outer anchoring part 16d for anchoring the outer casing of the gearshift cable 115r is disposed on the rear surface of the arm part 16b.

The link mechanism 11 is a four-point link mechanism for connecting the movable member 12 to the base member 16 so that the movable member 12 can move in relative terms with respect to the base member 16. The link mechanism 11 has an outside link member 11a and an inside link member 11b. A coil spring 14 is housed inside the link mechanism 11. One end of each of the outside and inside link members 11a and 11b is mounted at the lower end of the base member 16 via the link supporting part 16c so that this end is free to swing. The other ends of the outside and inside link members 11a and 11b are mounted on the link supporting part 12a of the movable member 12, as described later, so that the outside and inside link members 11a and 11b are free to swing. Both the outside and inside link members 11a and 11b are normally biased toward the sprocket R9 on the small-diameter side by the coil spring 14. Thus, the coil spring 14 serves to spring load the chain guide 13 toward the top sprocket, i.e., the smallest diameter rear sprocket R9. An inner anchoring part 11c is disposed on the outside link member 11a for anchoring the inner cable of the gearshift cable 115r.

The movable member 12 connects the chain guide 13 so that this chain guide is free to swing about the first pivot axis X1, which is substantially parallel to the hub axle 106a. The movable member 12 has a link supporting part 12a and a guide mounting part 12b. Both of the link members 11a and 11b of the link mechanism 11 are mounted on the link supporting part 12a so that these link members 11a and 11b are free to swing. Furthermore, the guide mounting part 12b on which the chain guide 13 is mounted so that this chain guide 13 is free to swing. A torsion coil spring (not shown in the figures) is mounted inside the guide mounting part 12b, and serves to spring load the chain guide 13 in a clockwise direction when viewed from the outside. Thus, the chain guide 13 is biased in the clockwise direction by the torsion coil spring as seen from the outside. As a result, tension acts on the chain 95, and the chain 95 tends not to slip from the sprockets R1 through R9. Furthermore, in the guide mounting part 12b, the mounting shaft 12c protrudes toward the chain guide 13.

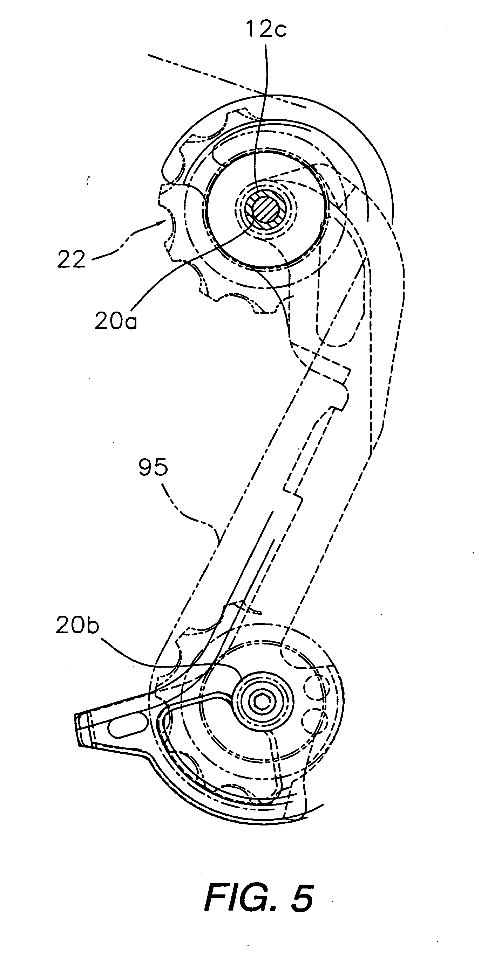

As shown in Figures 5 to 7, the chain guide 13 has an outside plate member 20, an inside plate member 21, a guide pulley 22 and a tension pulley 23. The outside and inside plate members 20 constitute examples of first and second plate members that are spaced apart to define a chain receiving space. The outside plate member 20 is mounted on the movable member 12 so that the outside plate member 20 is free to swing. The inside plate member is disposed facing the outside plate member 20. The guide pulley 22 is rotatably supported between the two plate members 20 and 21 at one end of the two plate members 20 and 21. The guide pulley 22 is configured and arranged to engage with the chain 95. The tension pulley 23 is rotatably supported between the two plate members 20 and 21 at the other ends of the two plate members 20 and 21. The tension pulley 23 is configured and arranged to engage with the chain 95.

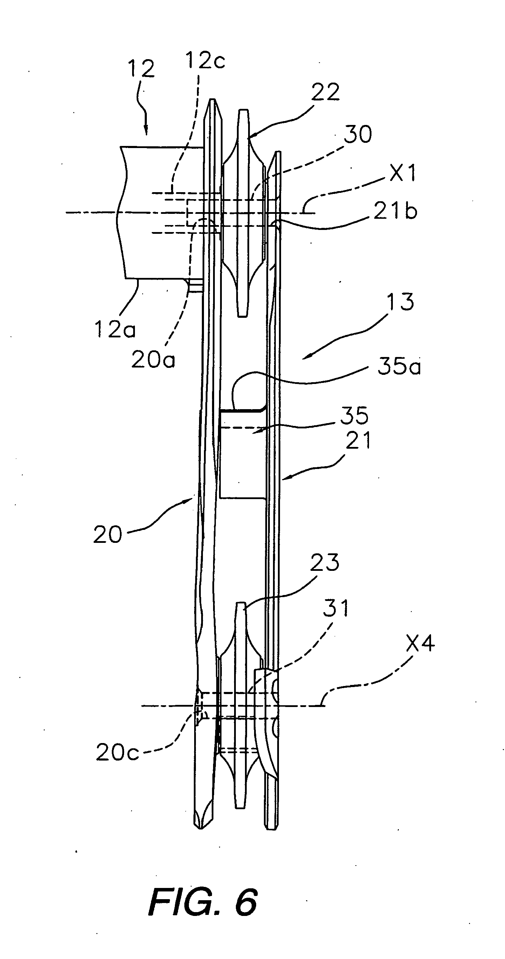

As shown in Figures 5 and 6, the outside plate member 20 is a member formed by press-molding a lightweight metal plate made of an aluminum alloy or the like. The outside plate member 20 is made to be thicker and stronger than the inside plate member 21 because a force acts on the outside plate member 20 during upshifting of the chain 95. Furthermore, in Figure 5, the outside plate member 20 is seen from the outside. The chain 95 and its engagements with the pulleys 22 and 23 are indicated by imaginary or virtual lines in Figure 5. In Figure 6, imaginary or virtual circles (lines) are also used to indicate the outer periphery of the pulleys 22 and 23. Moreover, in Figure 6, the chain guide 13 is seen from the front. A pivot support part 20a is formed on one end of the outside plate member 20. The pivot support part 20a is mounted on the mounting shaft 12c of the movable member 12 so as to be able to swing about the first pivot axis X1. The tip or distal end of the mounting shaft 12c is fixed by crimping to the inside surface of the outside plate member 20. This mounting shaft 12c is also used in order to rotatably support the guide pulley 22. Accordingly, the rotational center of the guide pulley 22 coincides with the first pivot axis X1 in this embodiment.

The outside plate member 20 has a boss part 20b which is used in order to rotatably support the tension pulley 23. The boss part 20b is formed on the other end of the outside plate member 20 with respect to the pivot support part 20a. The boss part 20b is provided with a through-hole 20c that accommodates a support shaft 31 for rotatably supporting the tension pulley 23. The support shaft 31 is a bolt member which has a threaded part on the tip end The support shaft 31 is installed from the outside plate member 20 side and screwed into the inside plate member 21.

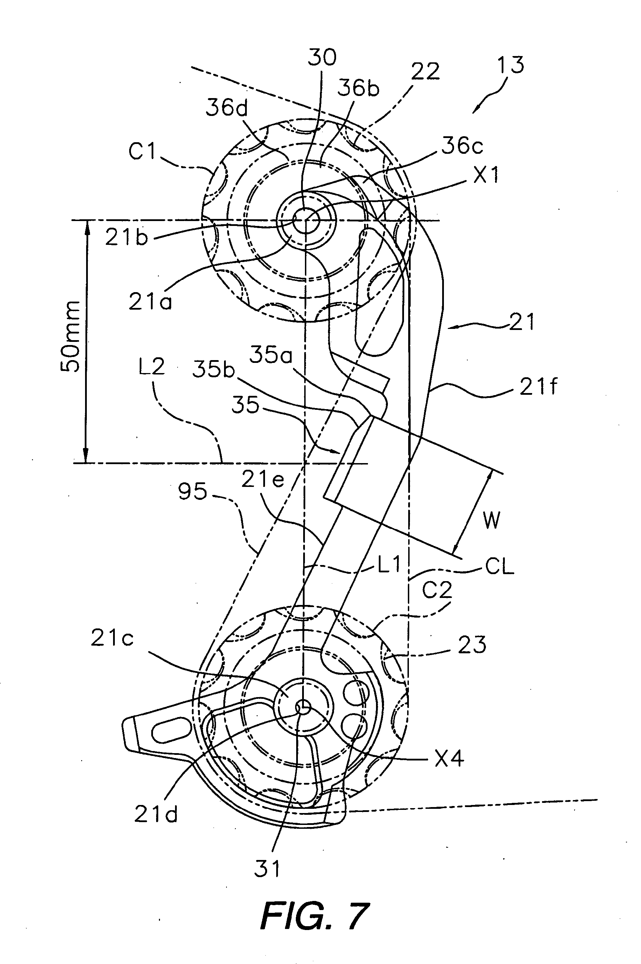

As shown in Figures 6 and 7, the inside plate member 21 is a member that is formed by press-molding a lightweight metal plate made of an aluminum alloy or the like. Furthermore, in Figure 7, the inside plate member 21 is seen from the outside. The chain 95 and its engagements with the pulleys 22 and 23 are indicated by imaginary or virtual lines in Figure 7. In Figure 7, imaginary circles (lines) are also used to indicate the outer periphery of the pulleys 22 and 23. The imaginary circles C1 and C2 join the tips of the teeth of the pulleys 22 and 23 with imaginary or virtual lines. A first boss part 21a is formed on one end of the inside plate member 21. The first boss part 21a is disposed in a position facing the pivot support part 20a of the outside plate member 20. A through-hole 21b is formed in the first boss part 21a. The support shaft 30 of the guide pulley 22 passes through this through-hole 21b. The support shaft 30 is mounted from the side of the inside plate member 21. The support shaft 30 is screwed into an internally threaded portion formed in the mounting shaft 12c of the movable member 12. A second boss part 21c is formed on the other end of the inside plate member 21. The second boss part 21c is used in order to rotatably support the tension pulley 23. The second boss part 21c is provided with an internally threaded portion 21d that accommodates the support shaft 31 for supporting the tension pulley 23. The first boss part 21a and second boss part 21c are formed so that these parts are disposed in the same plane.

The chain guide 13 also has a chain disengagement prevention part 35 arranged between the outside plate member 20 and the inside plate member 21. In this embodiment, the chain disengagement prevention part 35 is formed by folding an edge portion 21e of the inside plate member 21 toward the outside plate member 20 at an angle of approximately 90 degrees. The edge portion 21e is on the side of the inside plate member 21 that is closer to the mounting member 10 when in its normal operation condition. The chain disengagement prevention part 35 is folded such that it is aligned with the contour of the chain 95 passing across the guide pulley 22 and the tension pulley 23 and is substantially parallel to the chain 95. Consequently, if the chain 95 starts to drop off, the chain disengagement prevention part 35 can contact the chain 95 over a wide area and prevent the chain from dropping in an effective manner.

The chain disengagement prevention part 35 is entirely arranged on the side of a contact line CL that is closer to the mounting member 10 (i.e., farther toward the rear when the bicycle rear derailleur 97 is mounted to a bicycle), where the contact line CL is tangent to two imaginary circles C1 and C2 joining tooth tips of each of the guide pulley 22 and the tension pulley 23, respectively, on sides of the imaginary circles C1 and C2 that are farther from mounting member 10 (i.e., farther toward the front when the bicycle rear derailleur 97r is mounted to a bicycle). At least a portion of the chain disengagement prevention part 35 is arranged on the side of a second straight line L2 that is closer to the guide pulley 22, where the second straight line L2 is positioned at a distance of 50 mm from a rotational center X1 of the guide pulley 22 and oriented to intersect perpendicularly with a first straight line L1 that joins the rotational center X1 of the guide pulley 22 and a rotational center X4 of the tension pulley 23. Additionally, an upper end portion 35a of the chain disengagement prevention part 35 that is closer to the rotational center X1 of the guide pulley 22 than any other portion of the chain disengagement prevention part 35 is arranged on the contact line CL side of the first straight line L1. In this embodiment, the chain disengagement prevention part 35 is entirely arranged on the contact line CL side of the first straight line L1.

The width W of the chain disengagement prevention part 35 is preferably equal to or larger than ten millimeters and smaller than or equal to thirty millimeters. In this embodiment, the width W is approximately nineteen millimeters. The chain disengagement prevention part 35 has a slanted surface 35b formed on the upper end portion 35a. Since the width of the chain disengagement prevention part 35 is larger than the space between two teeth of a rear sprocket, which is typically approximately ten millimeters, even if the chain disengagement prevention part 35 contacts a rear sprocket, it will not readily become jammed between two teeth of the rear sprocket. It is not desirable for the width of the chain disengagement prevention part 35 to be larger than thirty millimeters because the weight of the derailleur will increase.

The tooth counts of the guide pulley 22 and the tension pulley 23 are both thirteen or less. In this embodiment, the tooth counts of both pulleys 22 and 23 are eleven. Although the tooth counts of both pulleys 22 and 23 are the same in this embodiment, it is acceptable for the tooth counts to be different. If the tooth counts of the guide pulley 22 and the tension pulley 23 are larger than 14, then the diameters of the pulleys 22 and 23 will be large and the weight will increase. Furthermore, if the pulley diameter is large, then the tension pulley 23 will be more likely to contact the sprocket when the chain guide 13 pivots forward by a large amount.

With the rear derailleur 97r configured as described above, when the inner cable of the shift cable 115r is pulled due to operation of the gear shifter 110r, the link mechanism 11 operates such that the chain guide 13 moves inward, i.e., toward the low-side sprocket R1. When the inner cable is loosened, the chain guide 13 moves outward toward the top-side sprocket R9.

Operation of the gear shifter 110r causes the inner cable of the shift cable 115r to move, thereby causing the link mechanism 11 to move. The movement of the link mechanism 11 causes the chain guide 13 to move to a position corresponding to one of the sprockets R1 to R9 of the rear sprocket cluster, which are arranged along the axial direction of the hub axle, and guide the chain 95 onto the corresponding sprocket. When this movement occurs, the chain guide 13 pivots about the first pivot axis X1.

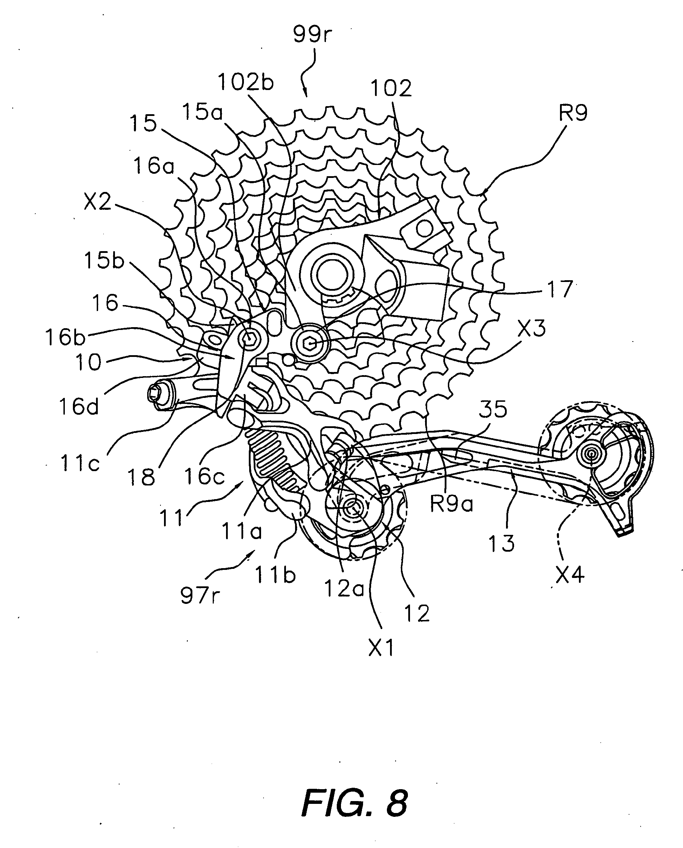

The chain guide 13 pivots forward the most, as shown in Figure 8, when the chain 95 is on the largest sprockets F3 and R1 in both the front and the rear. As a result, the chain guide 13 sometimes turns counterclockwise (counterclockwise from the perspective of Figure 8) due to a physical impact, such as when riding on a bumpy off-road surface.

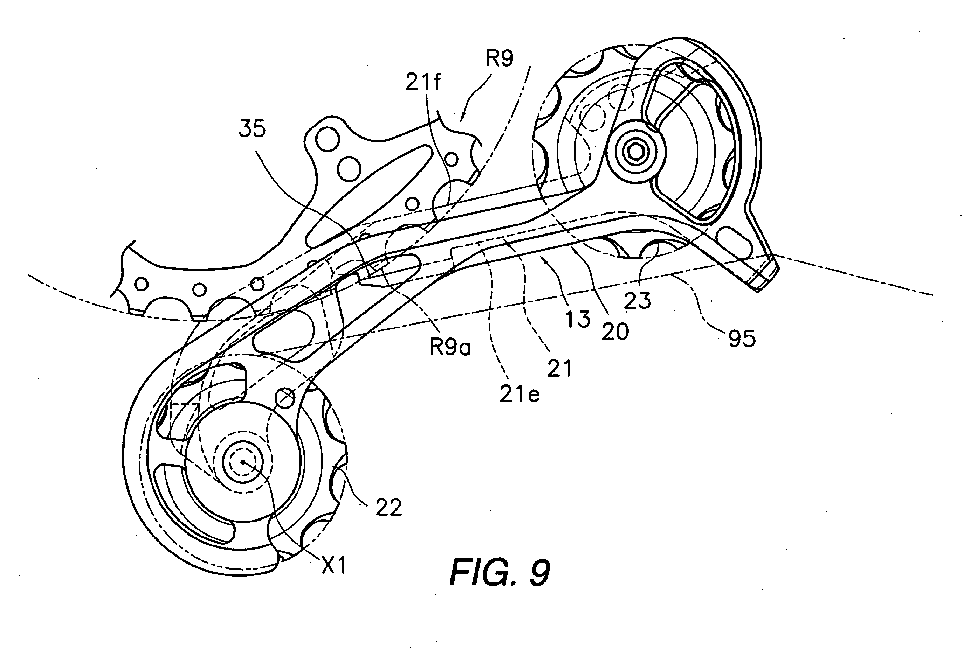

Figure 9 illustrates a state in which the chain guide 13 has swung counterclockwise from the position shown in Figure 8. From the perspectives of both the position of the chain guide 13 and the path of the chain 95, the state shown in Figure 9 is not a state that occurs during normal riding. Rather, it is a state in which the chain guide 13 has momentarily swung farther in the counterclockwise direction from the state shown in Figure 8 due to a physical impact. Even if the chain guide 13 swings to such an extreme position, the chain disengagement prevention part 35 will just barely contact the sprocket R9. Conversely, it is clear that the chain disengagement prevention part 35 would squarely hit the sprocket R9 if the chain disengagement prevention part 35 were formed by bending the edge portion 21f located on the side that is farther from the mounting member 10. With this embodiment, when the chain guide 13 is in the most forward position shown in Figure 8 and a physical impact causes the chain guide 13 to pivot farther as shown in Figure 9, the chain disengagement prevention part 35 does not get jammed in the rear sprocket R9.

Moreover, the gap between two teeth of a sprocket is normally approximately ten millimeters. Since the width W of the chain disengagement prevention part 35 is equal to or larger than ten millimeters and smaller than or equal to thirty millimeters, one end of the chain disengagement prevention part 35 can not easily enter in-between two teeth R9a of the largest rear sprocket R9 even if the other end contacts the gap between the teeth R9a.

### VARIATIONS OF THE FIRST EMBODIMENT

Although in the first embodiment the chain disengagement prevention part 35 is formed by folding (bending) the inside plate member 21, it is acceptable to form the chain disengagement prevention part by folding the outside plate member.

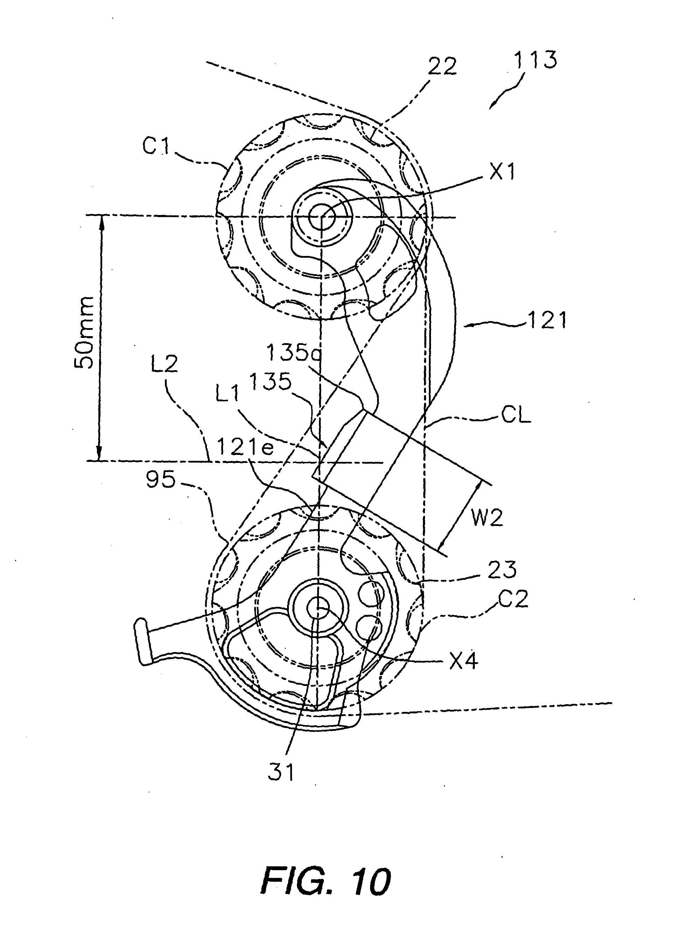

Although in the first embodiment the chain guide 13 is a long cage chain guide in which the distance between the guide pulley 22 and the tension pulley 23 is long, the invention can also be applied to a short cage chain guide 113 like that shown in Figure 10, in which the distance is short.

The chain guide 113 has a chain disengagement prevention part 135 arranged between an outside plate member (not shown) and an inside plate member 121. In this variation of the embodiment, the chain disengagement prevention part 135 is formed by folding an edge portion 121e of the inside plate member 121 toward the outside plate member 120 at an angle of approximately 90 degrees. The edge portion 121e is on the side of the inside plate member 121 that is closer to the mounting member 10. The chain disengagement prevention part 135 is folded such that it is aligned with the contour of the chain 95 passing across the guide pulley 22 and the tension pulley 23 and is substantially parallel to the chain 95.

Similarly to the first embodiment, the chain disengagement prevention part 135 is entirely arranged on the side of the contact line CL that is closer to the mounting member 10 (i.e., arranged rearward of the contact line CL when the rear derailleur 97r is mounted to a bicycle). Also, at least a portion of the chain disengagement prevention part 135 is arranged on the side of the second straight line L2 that is closer to the guide pulley 22. Additionally, an upper end portion 35a of the chain disengagement prevention part 135 that is closer to the rotational center X1 of the guide pulley 22 than any other portion of the chain disengagement prevention part 135 is arranged on the contact line CL side of the first straight line L1.

The width W of the chain disengagement prevention part 135 is preferably equal to or larger than ten millimeters and smaller than or equal to thirty millimeters. In this embodiment, the width W is approximately seventeen millimeters.

### SECOND EMBODIMENT

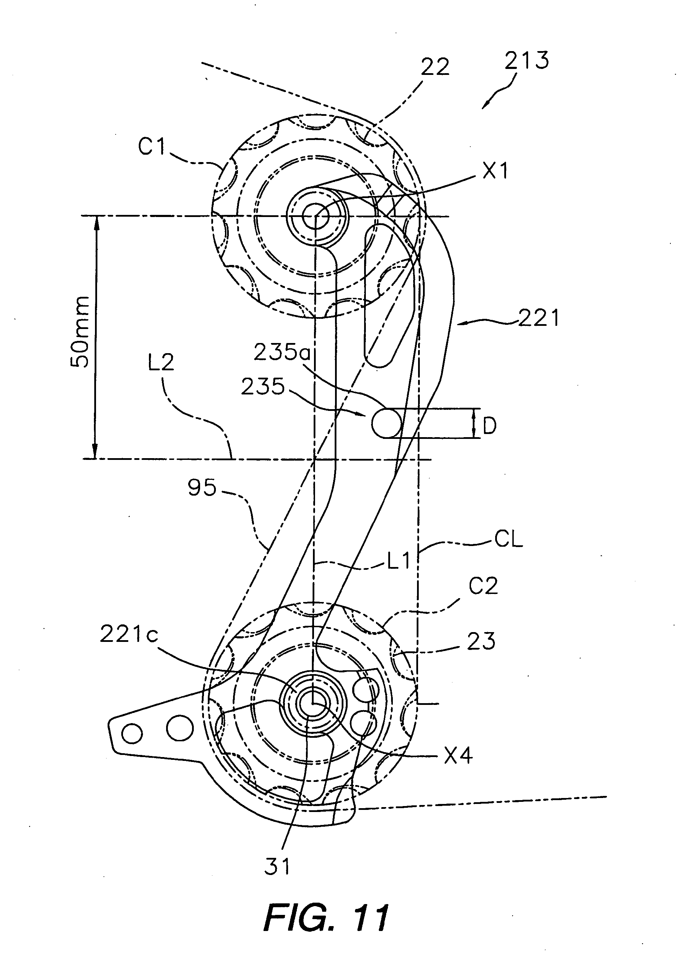

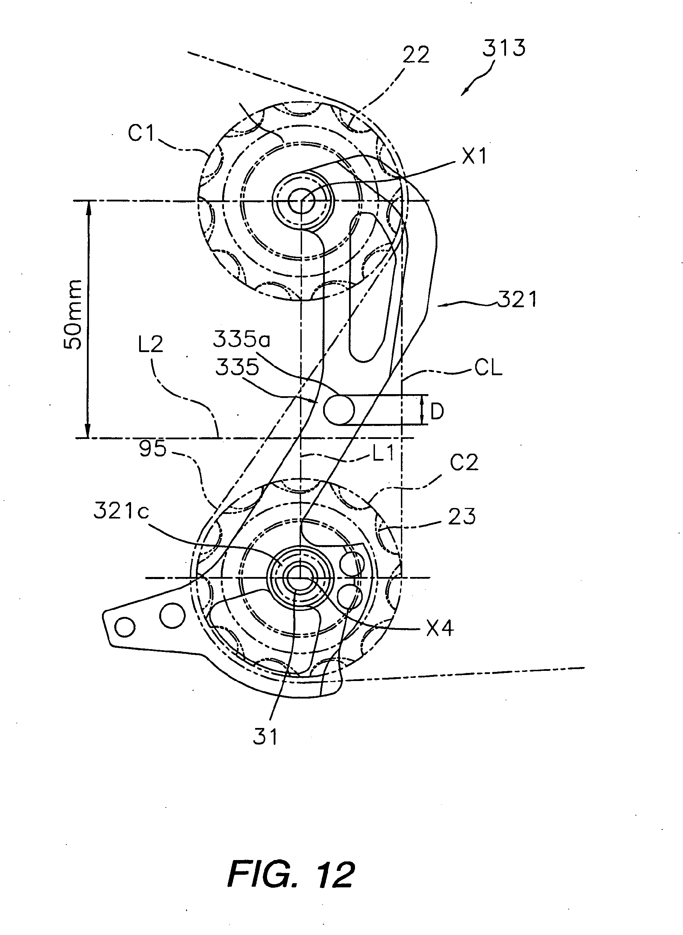

Referring now to Figures 11 and 12, a pair of chain guides 213 and 313 will now be explained in accordance with a second embodiment. The chain guides 213 and 313 are used with the rear derailleur 97r by replacing the chain guide 13 with either the chain guide 213 or the chain guide 313. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

While in the first embodiment the chain disengagement prevention part is formed by folding a portion of the inside plate member or the outside plate member, it is also acceptable for the chain drop preventing member to comprise, for example, a shaft-like member provided so as to protrude from one of the plate members. Figure 11 shows a long cage chain guide 213 and Figure 12 shows a short cage chain guide 313.

In each of Figures 11 and 12, the chain guide 213 or 313 has an outside plate member (not shown) and an inside plate member 221 or 331, both of which are made of, for example, carbon fiber reinforced plastic (CFRP) and have similar external shapes to the plate members of the first embodiment. Unlike a metal chain guide, it is difficult to form the chain disengagement prevention part by bending one of the plate members when the plate members are made of CFRP. Therefore, in this embodiment, the chain disengagement prevention part 235 or 335 is a shaft member that is fixed to the inside plate member 221 or 321.

The chain disengagement prevention part 235 or 335 is, for example, a stainless steel shaft member having a diameter (D) of approximately six millimeters and is fixed to the inside plate member 221 or 321 with any suitable fixing method, such as crimping, an adhesive, or press fitting.

Similarly to the first embodiment, in the second embodiment, the chain disengagement prevention part 235 or 335 is entirely arranged on the side of the contact line CL that is closer to the mounting member 10 (i.e., arranged rearward of the contact line CL when the rear derailleur 97r is mounted to a bicycle), where the contact line CL is tangent to the imaginary circles C1 and C2 of the pulleys 22 and 23. Additionally, at least a portion of the chain disengagement prevention part 235 or 335 is arranged on the side of the second straight line L2 that is closer to the guide pulley 22. Additionally, an upper end portion 235a or 335a of the chain disengagement prevention part 235 or 335 that is closer to the rotational center X1 (first pivot axis) of the guide pulley 22 than any other portion of the chain disengagement prevention part 235 or 335 is arranged on the contact line CL side of the first straight line L1. In this embodiment, the chain disengagement prevention part 235 or 335 is entirely arranged on the side of the second straight line L2 that is closer to closer to the guide pulley 22 and on the side of the first straight line L1 that is closer to the contact line CL.

In the second embodiment, since the chain disengagement prevention part 235 or 335 is arranged on the side of the contact line CL that is closer to the mounting member 10, the chain disengagement prevention part 235 or 335 is arranged in a position farther from the rear sprocket than the contact line CL where it cannot easily become jammed in the rear sprocket. Thus, the chain disengagement prevention part 235 or 335 is even less likely to become jammed in the teeth of the rear sprocket. Furthermore, since the chain disengagement prevention part 235 or 335 is shaft-shaped, it will not easily become jammed even if it does contact in-between the teeth of the rear sprocket. Consequently, even when the chain guide is in the most forwardly pivoted position, the chain disengagement prevention part 235 or 335 does not easily become jammed in the rear sprocket.

### VARIATIONS OF THE SECOND EMBODIMENT

Although in the second embodiment the chain disengagement prevention part 235 or 335 is fixed to the inside plate member 221 or 321, it is acceptable for a chain disengagement prevention part to be fixed to the outside plate member.

Although in the prior variation of the second embodiment the chain disengagement prevention part is fixed to either one of the plate members, it is acceptable for a chain disengagement prevention part to be arranged to connect the outside plate member and the inside plate member together. More specifically, if the chain disengagement prevention part is an open cylindrical shaft-like member, then the plate members can be connected together by inserting a bolt member through the internal hollow portion of the chain disengagement prevention part or passing bolt members through both plate members from the outside surfaces thereof and screwing the bolt members into both ends of the hollow portion of the chain disengagement prevention part.

### THIRD EMBODIMENT

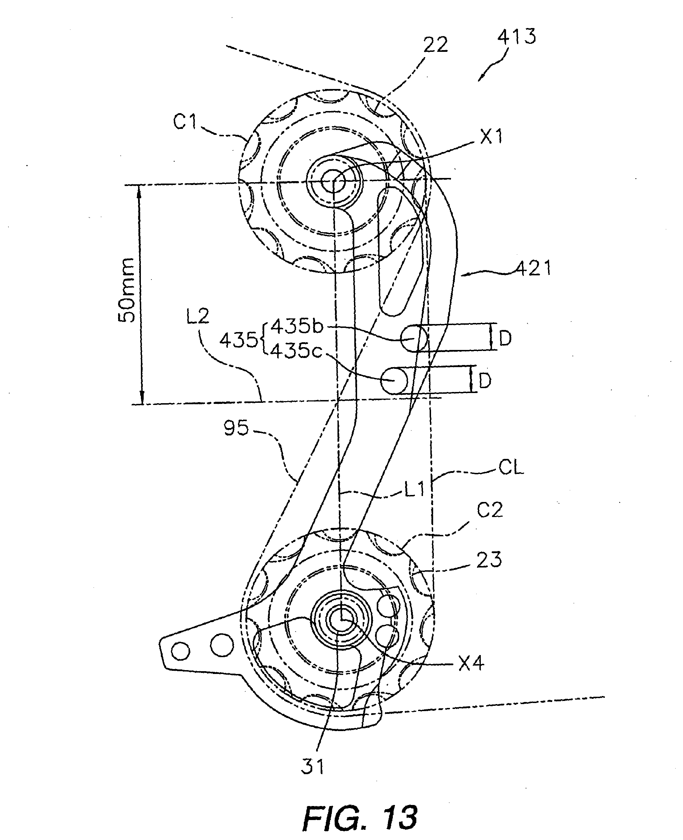

Referring now to Figure 13, a chain guide 413 will now be explained in accordance with a third embodiment. The chain guide 413 is used with the rear derailleur 97r of the first embodiment by replacing the chain guide 13 with the chain guide 413. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

In a third embodiment, as shown in Figure 13, the chain disengagement prevention part 435 of the chain guide 413 is arranged to be aligned with the contour of the chain 95 mounted across the two pulleys 22 and 23 and the chain disengagement prevention part 413 is entirely arranged on the side of the contact line CL that is closer to the mounting member 10. More specifically, the chain disengagement prevention part 435 comprises a first shaft member 435b and a second shaft member 435c that is arranged farther from the guide pulley 22 than the first shaft member 435b. The first shaft member 435b and the second shaft member 435c are arranged to be aligned side-by-side along the direction of the chain 95 mounted across the pulleys 22 and 23. The diameters D of both shaft members 435b and 435c are the same and both shaft members 435b and 435c are arranged on the side of the contact line CL that is closer to the mounting member 10. Also, the second shaft member 435c (which is farther from the guide pulley 22 than the first shaft member 435b) is arranged on the side of the second straight line L2 that is closer to the guide pulley 22. Both shaft members 435b and 435c are fixed to the inside plate member 421 and arranged to extend toward the outside plate member.

It is also acceptable to fix both shaft members to the outside plate member such that they extend toward the inside plate member or to fix one of the shaft members to the inside plate member 421 and the other shaft member to the outside plate member.

It is also acceptable to form the chain disengagement prevention part by folding one of the plate members to be aligned with the contour of the chain 95 as in the first embodiment or by fixing a plate-like member to one of the plate members such that the plate-like member is aligned with the contour of the chain 95.

In the third embodiment, the chain disengagement prevention part 435 is arranged on the side of a contact line CL (which joins the two pulleys 22 and 23) that is closer to the mounting member 10. As a result, the chain disengagement prevention part 435 is arranged in a position separated from the rear sprocket where it cannot easily become jammed in the teeth of the rear sprocket. Thus, the chain disengagement prevention part 435 is less likely to become jammed in the teeth of the rear sprocket. The chain disengagement prevention part 435 is arranged to be aligned with the contour of the chain 95 mounted across the pulleys 22 and 23.

Although the preceding embodiments present manual rear derailleurs for mountain bikes, the invention is not limited to such rear derailleurs. The present invention can be applied to any rear derailleur that has a guide pulley and a tension pulley, including rear derailleurs driven with an electric actuator or other actuating mechanism.

Although in the preceding embodiments the first pivot axis X1 of the outside plate member is coincident with the rotational center of guide pulley 22, it is also acceptable for the first pivot axis X1 and the rotational center to be arranged in separate positions so as not to be coincident.

Although the preceding embodiments present a link mechanism as an example of the connecting mechanism mentioned in the claims, the connecting mechanism is not limited to a link mechanism. Rather, it can be a screw mechanism, a lever mechanism, or any other mechanism that can move the movable member with respect to the base member.

Although the preceding embodiments present rear derailleurs in which the mounting member 10 comprises a bracket 15 and a base member 16, the present invention is not limited to such a rear derailleur. The present invention can also be applied to, for example, a rear derailleur having a base member configured to be mounted directly to the frame of a bicycle. In such a case, the mounting member comprises only a base member.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with a rear derailleur of the present invention. Accordingly, these terms, as utilized to describe rear derailleur of the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle rear derailleur comprising:
a mounting member (10) configured to be mounted to the frame;
a connecting mechanism (11) movably connected at a first end to the mounting member to move with respect to the mounting member;
a movable member (12) connected to a second end of the connecting mechanism to be moved by the connecting mechanism; and
a chain guide (13) pivotally connected to the movable member to pivot about a first axis (X1), the chain guide including
a first plate member (20) connected at a first end to the movable member such that the first plate member pivots freely about the first axis;
a second plate member (21) spaced from the first plate member to form a chain receiving space therebetween;
a guide pulley (22) rotatably arranged between the first and second plate members at the first end of the first plate member; and
a tension pulley (23) arranged at a position separated from the guide pulley, at least one of the first and second plate members including a chain disengagement prevention part (35) arranged between the guide pulley and the tension pulley,
wherein the chain disengagement prevention part (35) being a bent part of at least one of the first and second plate members (20, 21) that is formed by folding an edge portion of at least one of the first and second plate members,
**characterized in that**, when the chain guide extends substantially in a vertical direction,
the edge portion being on a side that is closer to the mounting member (10); the chain disengagement prevention part (35) is entirely arranged on one side of a contact line (CL) that is closer to the mounting member (10), with the contact line (CL) being defined as a tangent line to two imaginary circles joining tooth tips of each of the guide pulley and the tension pulley, respectively, on sides of the imaginary circles that are farther from the mounting member.

2. The bicycle rear derailleur as recited in claim 1, wherein the chain disengagement prevention part (35) is having a shaft-like form that extends from at least one of the first and second plate members.

3. The bicycle rear derailleur as recited in claim 1 or 2, wherein the chain disengagement prevention part (35) extends from the second plate member (21), in particular the chain disengagement prevention part being a shaft member fixed to the second plate member.

4. The bicycle rear derailleur as recited in any one of claims 1 to 3, wherein the chain disengagement prevention part (35) extends to be aligned with a contour of a chain path that extends between the guide pulley (22) and the tension pulley (23).

5. The bicycle rear derailleur as recited in any one of claims 1 to 4, wherein the chain disengagement prevention part (35) has a width that is equal to or larger than ten millimetres and smaller than or equal to thirty millimetres.

6. The bicycle rear derailleur as recited in any one of claims 1 to 5, wherein the guide pulley (22) and the tension pulley (23) have rotational centers joined to define a first straight line with the chain disengagement prevention part including at least a portion arranged on a side of a second straight line that is closer to the guide pulley, with the second straight line being positioned at a distance of fifty millimeters from the rotational center of the guide pulley and oriented to intersect perpendicularly with the first straight line.

7. The bicycle rear derailleur as recited in any one of claims 1 to 6, wherein the chain guide (13) is configured as solely apply tension to a chain when the chain is mounted on the guide pulley and the tension pulley.

8. The bicycle rear derailleur as recited in any one of claims 1 to 7, wherein the mounting member (10) includes a bracket (15) configured to be fixed to the frame and a base member (16) pivotally connected to the bracket for pivoting about a second axis.

9. The bicycle rear derailleur as recited in any one of claims 1 to 8, wherein the guide pulley (22) has a center rotational axis that coincides with the first axis.

10. The bicycle rear derailleur as recited in any one of claims 1 to 9, wherein the guide pulley (22) and the tension pulley (23) each have a tooth count of thirteen or smaller.

## Patentansprüche

1. Fahrradheckderailleur, umfassend:
ein Montageelement (10), konfiguriert um an dem Rahmen montiert zu werden;
einen Verbindungsmechanismus (11), beweglich verbunden an ein erstes Ende des Montageelementes, um sich mit Bezug auf das Montageelement zu bewegen;
ein bewegliches Element (12), verbunden mit einem zweitem Ende des Verbindungsmechanismus, um durch den Verbindungsmechanismus bewegt zu werden; und
eine Kettenführung (13), schwenkbar verbunden zu dem beweglichen Element zum Schwenken bezüglich einer ersten Achse (X1), wobei die Kettenführung enthält
ein erstes Plattenelement (20), verbunden mit einem ersten Ende an das bewegliche Element, derart, dass das erste Plattenelement frei schwenken kann bezüglich der ersten Achse;
ein zweites Plattenelement (21), beabstandet von dem ersten Plattenelement, zum Ausbilden eines Kettenaufnahmeraumes dazwischen;
eine Führungsrolle (22), drehbar angeordnet zwischen den ersten und zweiten Plattenelementen an dem ersten Ende des ersten Plattenelementes; und
eine Spannrolle (23), angeordnet bei einer Position separat von der Führungsrolle,
wobei zumindest eines der ersten und zweiten Plattenelemente einen Kettenausrückverhinderungspart (35) enthält, angeordnet zwischen der Führungsrolle und der Spannrolle,
wobei der Kettenausrückverhinderungspart (35) ein gebogener Part zumindest eines der ersten und zweiten Plattenelemente (20, 21) ist, gebildet durch Falten eines Kantenabschnittes von zumindest einem der ersten und zweiten Plattenelemente, **dadurch gekennzeichnet, dass** wenn sich die Kettenführung im Wesentlichen in einer vertikalen Richtung erstreckt der Kantenabschnitt an einer Seite vorliegt, die näher zu dem Montageelement (10) ist, der Kettenausrückverhinderungspart (35) vollständig angeordnet ist an einer Seite einer Berührungslinie (CL), welche näher zu dem Montageelement (10) liegt, wobei die Berührungslinie (CL) definiert ist als eine Tangentiallinie zu zwei imaginären Kreisen, die die Zahnspitzen von jeweils der Führungsrolle und der Spannungsrolle verbinden, und zwar an Seiten der imaginären Kreise die weiter von dem Montageelement sind.

2. Fahrradheckderailleur nach Anspruch 1, bei welchem der Kettenausrückverhinderungspart (35) eine wellenartige Form aufweist, sich erstreckend von zumindest einem der ersten und zweiten Plattenelemente.

3. Fahrradheckderailleur nach Anspruch 1 oder 2, bei welchem der Kettenausrückverhinderungspart (35) sich erstreckt, ausgehend von dem zweiten Plattenelement (21), insbesondere ist der Kettenausrückverhinderungspart ein Wellenelement, festgelegt an dem zweiten Plattenelement.

4. Fahrradheckderailleur nach einem der Ansprüche 1 bis 3, bei welchem der Kettenausrückverhinderungspart (35) sich erstreckt, um ausgerichtet zu sein mit einer Kontur eines Kettenpfades, sich erstreckend zwischen der Führungsrolle (22) und der Spannrolle (23).

5. Fahrradheckderailleur nach einem der Ansprüche 1 bis 4, bei welchem der Kettenausrückverhinderungspart (35) eine Breite aufweist, die gleich ist zu oder größer als zehn Millimeter und kleiner als oder gleich zu dreißig Millimeter.

6. Fahrradheckderailleur nach einem der Ansprüche 1 bis 5, bei welchem die Führungsrolle (22) und die Spannrolle (23) verbundene Rotationsmitten aufweisen, zum Definieren einer ersten geraden Linie, wobei der Kettenausrückverhinderungspart zumindest einen Abschnitt enthält, angeordnet an einer zweiten geraden Linie, die näher zu der Führungsrolle ist, wobei die zweite gerade Linie positioniert ist bei einem Abstand von fünfzig Millimeter von der Rotationsmitte der Führungsrolle und ausgerichtet zum senkrechten Scheiden mit der ersten geraden Linie.

7. Fahrradheckderailleur nach einem der Ansprüche 1 bis 6, bei welcher die Kettenführung (13) konfiguriert ist als lediglich Spannung bewirkend bezüglich einer Kette, wenn die Kette an der Führungsrolle und der Spannrolle montiert ist.

8. Fahrradheckderailleur nach einem der Ansprüche 1 bis 7, bei welchem das Montageelement (10) eine Klammer (15) enthält, konfiguriert um an dem Rahmen befestigt zu werden, sowie ein Basiselement (16), schwenkbar verbunden bezüglich der Klammer zum Schwenken bezüglich einer zweiten Achse.

9. Fahrradheckderailleur nach einem der Ansprüche 1 bis 8, bei welchem die Führungsrolle (22) eine mittlere Rotationsachse aufweist, die zusammenfällt mit der ersten Achse.

10. Fahrradheckderailleur nach einem der Ansprüche 1 bis 9, bei welcher die Führungsrolle (22) und die Spannrolle (23) jeweils eine Zähneanzahl haben von dreizehn oder geringer.

## Revendications

1. Dérailleur arrière de bicyclette comprenant:
un élément de montage (10) configuré pour être monté au cadre ;
un mécanisme de liaison (11), relié mobile, au niveau d'une première extrémité, à l'élément de montage, pour se déplacer par rapport à l'élément de montage ;
un élément mobile (12) relié à une deuxième extrémité du mécanisme de liaison, pour être déplacé par le mécanisme de liaison ; et
un guide de chaîne (13) relié pivotant à l'élément mobile, pour pivoter par rapport à un premier axe (X1), le guide de chaîne comprenant
un premier élément de plaque (20) relié au niveau d'une première extrémité à l'élément mobile, de sorte que le premier élément de plaque pivote librement par rapport au premier axe ;
un deuxième élément de plaque (21), espacé du premier élément de plaque, pour former un espace de réception de chaîne entre les deux ;
une poulie de guidage (22), agencée rotative entre les premier et deuxième éléments de plaque au niveau de la première extrémité du premier élément de plaque ;
et
une poulie de tension (23), agencée au niveau d'une position séparée de la poulie de guidage,
au moins l'un des premier et deuxième éléments de plaque comprenant une partie de prévention de désengagement de chaîne (35) agencée entre la poulie de guidage et la poulie de tension,
dans lequel la partie de prévention de désengagement de chaîne (35) est une partie courbée d'au moins un des premier et deuxième éléments de plaque (20, 21) qui est formée en repliant une partie d'arête d'au moins un des premier et deuxième éléments de plaque,
**caractérisé en ce que**,
lorsque le guide de chaîne s'étend sensiblement dans une direction verticale, la partie d'arête est sur un côté qui est plus proche de l'élément de montage (10), la partie de prévention de désengagement de chaîne (35) est agencée entièrement sur un côté d'une ligne de contact (CL) qui est plus proche de l'élément de montage (10), la ligne de contact (CL) étant définie comme une ligne tangente à deux cercles imaginaires reliant les extrémités de dents de chacune des poulies de guidage et de tension, respectivement, sur des côtés des cercles imaginaires qui sont plus éloignés de l'élément de montage.

2. Dérailleur arrière de bicyclette selon la revendication 1, dans lequel la partie de prévention de désengagement de chaîne (35) a une forme en forme d'arbre qui s'étend depuis au moins l'un des premier et deuxième éléments de plaque.

3. Dérailleur arrière de bicyclette selon l'une quelconque des revendications 1 ou 2, dans lequel la partie de prévention de désengagement de chaîne (35) s'étend depuis le deuxième élément de plaque (21), en particulier la partie de prévention de désengagement de chaîne est un élément d'arbre fixé au deuxième élément de plaque.

4. Dérailleur arrière de bicyclette selon l'une quelconque des revendications 1 à 3, dans lequel la partie de prévention de désengagement de chaîne (35) s'étend de manière à être alignée avec un contour d'un chemin de chaîne qui s'étend entre la poulie de guidage (22) et la poulie de tension (23).

5. Dérailleur arrière de bicyclette selon l'une quelconque des revendications 1 à 4, dans lequel la partie de prévention de désengagement de chaîne (35) a une largeur qui est supérieure ou égale à dix millimètres et inférieure ou égale à trente millimètres.

6. Dérailleur arrière de bicyclette selon l'une quelconque des revendications 1 à 5, dans lequel la poulie de guidage (22) et la poulie de tension (23) ont des centres de rotation reliés pour définir une première ligne droite, la partie de prévention de désengagement de chaîne comprenant au moins une partie agencée sur un côté d'une deuxième ligne droite qui est plus proche de la poulie de guidage, la deuxième ligne droite étant positionnée à une distance de cinquante millimètres depuis le centre de rotation de la poulie de guidage, et étant orientée pour croiser perpendiculairement la première ligne droite.

7. Dérailleur arrière de bicyclette selon l'une quelconque des revendications 1 à 6, dans lequel le guide de chaîne (13) est configuré pour appliquer uniquement une tension à une chaîne lorsque la chaîne est montée sur la poulie de guidage et la poulie de tension.

8. Dérailleur arrière de bicyclette selon l'une quelconque des revendications 1 à 7, dans lequel l'élément de montage (10) comprend un élément support (15) configuré pour être fixé au cadre et un élément de base (16) relié pivotant à l'élément support, pour pivoter par rapport à un deuxième axe.

9. Dérailleur arrière de bicyclette selon l'une quelconque des revendications 1 à 8, dans lequel la poulie de guidage (22) a un axe de rotation central qui coïncide avec le premier axe.

10. Dérailleur arrière de bicyclette selon l'une quelconque des revendications 1 à 9, dans lequel la poulie de guidage (22) et la poulie de tension (23) ont chacune un nombre de dents égales à 13 ou à un nombre inférieur.
